# EUROPÄISCHE PATENTSCHRIFT

(11) **EP 3 693 590 B1**
(45) Veröffentlichungstag und Bekanntmachung des Hinweises auf die Patenterteilung: **07.08.2024**
(21) Anmeldenummer: 19219736.6
(22) Anmeldetag: 27.12.2019
(51) Int. Cl.: F02D 41/14, G01N 27/419, F02D 41/20, F02D 41/28

(54) **VERFAHREN UND VORRICHTUNG ZUM BETREIBEN EINER BREITBAND-LAMBDASONDE**
METHOD AND DEVICE FOR OPERATING A BROADBAND LAMBDA PROBE
PROCÉDÉ ET DISPOSITIF DESTINÉS AU FONCTIONNEMENT D'UNE SONDE LAMBDA À LARGE BANDE

(30) Priorität: 31.01.2019 DE 102019201234
(43) Veröffentlichungstag der Anmeldung: 12.08.2020
(73) Patentinhaber: Robert Bosch GmbH, 70442 Stuttgart (DE)
(72) Erfinder: Ledermann, Bernhard, 71263 Weil Der Stadt (DE); Bevot, Claudius, 70197 Stuttgart (DE); Kneer, Andreas, 73257 Koengen (DE)

(56) Entgegenhaltungen:
- WO-A1-01/96849
- WO-A1-01/96851
- DE-A1- 102011 007 068
- DE-A1- 102016 220 649
- DE-C1- 10 101 755
- DE-C1- 10 244 466
- US-A- 5 810 997
- US-A1- 2012 266 647
- US-A1- 2012 266 657

## Beschreibung

### Stand der Technik

Die Offenbarung betrifft ein Verfahren zum Betreiben einer Breitband-Lambdasonde, bei der eine Nernstzelle und eine Pumpzelle über einen ersten Schaltungsknotenpunkt elektrisch in Serie geschaltet sind.

Die Offenbarung betrifft ferner eine Vorrichtung zum Betreiben einer Breitband-Lambdasonde, bei der eine Nernstzelle und eine Pumpzelle über einen ersten Schaltungsknotenpunkt elektrisch in Serie geschaltet sind. WO 01 /96851 A1 offenbart eine Breitband-Lambdasonde und deren Betrieb.

### Offenbarung der Erfindung

Bevorzugte Ausführungsformen beziehen sich auf
ein Verfahren zum Betreiben einer Breitband-Lambdasonde gemäß Anspruch 1. Dadurch wird der erste Schaltungsknotenpunkt, der zwischen der Nernstzelle und der Pumpzelle liegt bzw. diese Zellen miteinander verbindet, mit einem dem ersten Sollwert entsprechenden elektrischen Potential, das von dem Spannungsabfall über der Pumpzelle abhängt, beaufschlagt. Dies ermöglicht eine effiziente Nutzung einer ggf. bereits vorhandenen elektrischen Versorgungsspannung und einen effizienten Betrieb von einer oder mehreren Stromquellen zur Versorgung der Breitband-Lambdasonde mit einem Betriebsstrom.

Bei weiteren bevorzugten Ausführungsformen weist die Breitband-Lambdasonde beispielsweise einen Aufbau auf, wie er beispielhaft in der Figur 1 der DE 10 2013 220 756 A1 gezeigt ist.

Bei weiteren bevorzugten Ausführungsformen wird mittels der Breitband-Lambdasonde, insbesondere bei Anwendungen im Kraftfahrzeugbereich, ein Lambdawert (Verbrennungsluftverhältnis) aus einem elektrischen Strom, der durch die Zellen (Nernstzelle und Pumpzelle) fließt, ermittelt. Bei weiteren bevorzugten Ausführungsformen wird der Strom durch die Pumpzelle dabei z.B. mittels eines sog. Pumpstromreglers so eingeregelt, dass an der Nernstzelle z.B. 450 mV, Millivolt, gemessen werden kann, mithin eine Nernstspannung von z.B. 450 mV an der Nernstzelle abfällt. Je nachdem, ob fettes oder mageres Abgas an der Breitband-Lambdasonde anliegt, kann gemäß weiteren bevorzugten Ausführungsformen der Strom in positiver oder negativer Richtung durch die Sonde getrieben werden. Hierfür kann bei weiteren bevorzugten Ausführungsformen wenigstens eine Stromquelle vorgesehen sein.

Bei weiteren bevorzugten Ausführungsformen wird für einen Betrieb der Breitband-Lambdasonde eine (einzige) positive Betriebsspannung bereitgestellt, die insbesondere bei Anwendungen im Kraftfahrzeugbereich beispielsweise aus einer Bordnetzspannung des Kraftfahrzeugs ableitbar ist. Um dennoch die Breitband-Lambdasonde je nach Betriebszustand mit einem positiven oder einem negativen Betriebsstrom versorgen zu können, sind bei weiteren bevorzugten Ausführungsformen zwei Stromquellen (eine "negative Stromquelle", die dazu ausgebildet ist, einen negativen Strom durch die Pumpzelle zu treiben, und eine "positive Stromquelle", die dazu ausgebildet ist, einen positiven Strom durch die Pumpzelle zu treiben) und eine Bezugselektrode vorgesehen, mittels derer, insbesondere wahlweise, Ströme in beide Richtungen durch die Pumpzelle getrieben werden können. Hierzu ist die Bezugselektrode bei weiteren bevorzugten Ausführungsformen mit dem ersten Schaltungsknotenpunkt verbindbar, der bei weiteren bevorzugten Ausführungsformen insbesondere einem ersten Anschluss der Pumpzelle entspricht. Ein zweiter Anschluss der Pumpzelle ist bei weiteren bevorzugten Ausführungsformen, insbesondere wahlweise, mit der bzw. den Stromquellen verbindbar. Die Bezugselektrode kann bei weiteren bevorzugten Ausführungsformen auch als "virtuelle Masseelektrode" bezeichnet werden.

Bei weiteren bevorzugten Ausführungsformen ist vorgesehen, dass die Bezugselektrode zeitweise auf ein elektrisches Potential gelegt wird, das z.B. zumindest etwa einer halben Spannung der vorstehend genannten einen (insbesondere einzigen) positiven Betriebsspannung ("Chip-Versorgung"), bezogen auf ein erstes Bezugspotential, beispielsweise das (reale) Massepotential, entspricht. Somit kann sowohl die negative Stromquelle, als auch die positive Stromquelle Ströme durch die Zelle treiben. Bei weiteren bevorzugten Ausführungsformen ist vorgesehen, dass die positive Betriebsspannung ("Chip-Versorgung") z.B. 5 V (Volt) beträgt.

Untersuchungen der Anmelderin zufolge benötigen reale Stromquellen bei weiteren bevorzugten Ausführungsformen einen nichtverschwindenden Spannungsabfall Udrop über der (Strom-)Quelle, um einen Strom treiben zu können. Bei weiteren bevorzugten Ausführungsformen beträgt der Spannungsabfall Udrop beispielsweise 1 V.

Weiteren Untersuchungen der Anmelderin zufolge weist die Pumpzelle der Breitband-Lambdasonde eine Spannungsquelle mit einem zugehörigen Innenwiderstand auf bzw. kann als Spannungsquelle mit einem zugehörigen Innenwiderstand aufgefasst bzw. modelliert werden. Dadurch fällt bei einem Stromfluss durch die Pumpzelle eine Spannung ab. Bei weiteren bevorzugten Ausführungsformen kann dieser Spannungsabfall über der Pumpzelle je nach Art und/oder Betrieb und/oder Konfiguration der Breitband-Lambdasonde bzw. der Pumpzelle maximal etwa 2,5 V betragen.

Bei weiteren bevorzugten Ausführungsformen ist vorgesehen, dass, insbesondere im Falle eines negativen Betriebsstroms bzw. Pumpstroms durch die Pumpzelle, die Spannung Uvm an der Bezugselektrode, bezogen auf das erste Bezugspotential, insbesondere Massepotential, größer gleich einer Summe aus dem Spannungsabfall Up- an der Pumpzelle (im Falle des negativen Betriebsstroms) und dem Spannungsabfall Udrop- an der negativen Stromquelle ist, Uvm >= Up- + Udrop-, wodurch sichergestellt ist, dass die (reale) negative Stromquelle einen Strom treiben kann.

Bei weiteren bevorzugten Ausführungsformen ist vorgesehen, dass, insbesondere im Falle eines positiven Betriebsstroms bzw. Pumpstroms durch die Pumpzelle, die Spannung Uvm an der Bezugselektrode, bezogen auf das erste Bezugspotential, insbesondere Massepotential, kleiner gleich einer Differenz aus der (insbesondere einzigen) positiven Betriebsspannung Uchip_supply, dem Spannungsabfall Up+ an der Pumpzelle (im Falle des positiven Betriebsstroms) und dem Spannungsabfall Udrop+ an der positiven Stromquelle ist, Uvm <= Uchip_supply - Udrop+ - Up+, wodurch sichergestellt ist, dass die (reale) positive Stromquelle einen Strom treiben kann.

Bei weiteren bevorzugten Ausführungsformen kann für den Betrieb der Breitband-Lambdasonde sowohl mit negativem als auch mit positivem Betriebsstrom - unter Verwendung der vorstehend beispielhaft genannten Werte für die Spannungsabfälle - die positive Versorgungspannung wie folgt gewählt werden: Up- + Udrop- = Uchip_supply - Udrop+ - Up+, was auf Uchip_supply = Up- + Udrop- - Udrop+ - Up+ führt, also mit o.g. Beispielwerten: Uchip_supply = 2,5 V + 1 V + 1 V + 2,5 V = 7 V, was ersichtlich höher ist als eine typischerweise verfügbare Versorgungsspannung für Recheneinrichtungen von z.B. 5 Volt. Bei weiteren bevorzugten Ausführungsformen kann demnach die Versorgungsspannung für die Breitband-Lambdasonde bzw. die sie speisenden Stromquellen (insbesondere positiv und negativ) zu 7 V gewählt werden, wobei die Versorgungsspannung ggf. aus der typischerweise verfügbaren Versorgungsspannung von z.B. 5 V erzeugt wird.

Bei weiteren bevorzugten Ausführungsformen ist demgegenüber wie bereits eingangs beschrieben, vorgesehen, zumindest zeitweise das nachfolgende Verfahren auszuführen: Ermitteln eines Spannungsabfalls über der Pumpzelle, Ermitteln eines ersten Sollwerts für das elektrische Potential des ersten Schaltungsknotenpunkts in Abhängigkeit des Spannungsabfalls über der Pumpzelle, Beaufschlagen des ersten Schaltungsknotenpunkts mit dem ersten Sollwert. Gegenüber einem permanenten Belassen des ersten Schaltungsknotenpunkts auf einem konstanten elektrischen Potential, das z.B. der halben Versorgungsspannung entspricht, kann somit gemäß bevorzugten Ausführungsformen der erste Schaltungsknotenpunkt in Abhängigkeit von der Spannungsabfall über der Pumpzelle wahlweise auf verschiedene elektrische Potentiale gelegt bzw. mit verschiedenen elektrischen Potentialen beaufschlagt werden. Dies ermöglicht vorteilhaft die Nutzung einer (einzigen) positiven Versorgungsspannung von z.B. 5 V und ermöglicht ferner gleichzeitig, dennoch genug Spannung für einen zuverlässigen Betrieb der Breitband-Lambdasonde und die ihr zugeordneten Stromquellen bereitstellen.

Weitere bevorzugten Ausführungsformen nutzen vorteilhaft aus, dass die Spannung an der Pumpzelle je nach Betriebszustand (insbesondere Strom und Gas) der Breitband-Lambdasonde positiv oder negativ ist, und dass somit insbesondere je nach der momentanen Luftzahl λ entweder die positive oder die negative Stromquelle aktiv ist, nicht jedoch beide Stromquellen gleichzeitig. Dies erlaubt Untersuchungen der Anmelderin zufolge, bei weiteren bevorzugten Ausführungsformen das elektrische Potential der Bezugselektrode ("virtuelle Masse"), also des ersten Schaltungsknotenpunkts zwischen der Nernstzelle und der Pumpzelle, variabel zu gestalten, insbesondere das Potential des ersten Schaltungsknotenpunkts je nach Stromrichtung und Zellspannung der Pumpzelle zu verändern.

Weiteren Untersuchungen der Anmelderin zufolge, kann es an (insbesondere parasitären) Kapazitäten von Leitungen und/oder Anschlüssen und/oder sonstigen Komponenten der Breitband-Lambdasonde wie z.B. der Nernstzelle und der Pumpzelle ("Leitungs-, Pin- und Sondenkapazitäten") zu Umladeströmen kommen, wenn das Potential des ersten Schaltungsknotenpunkts verändert wird. Solche Umladeströme können u.U. das Sensormessergebnis der Breitband-Lambdasonde beeinflussen. Daher ist bei weiteren bevorzugten Ausführungsformen vorgesehen, das Potential des ersten Schaltungsknotenpunkts insbesondere dann (vorzugsweise nur dann) zu verändern, wenn auch Bedarf besteht, also z.B. dann, wenn die Zellspannung z.B. der Pumpzelle so groß wird, dass die momentan aktive (insbesondere positive oder negative) Stromquelle nicht mehr genügend Spannungsabfall hat.

Bei weiteren bevorzugten Ausführungsformen ist vorgesehen, dass das Ermitteln des ersten Sollwerts in Abhängigkeit einer Kennlinie ausgeführt wird, wobei insbesondere die Kennlinie eine vorgebbare Abhängigkeit des ersten Sollwerts von dem Spannungsabfall über der Pumpzelle aufweist.

Bei weiteren bevorzugten Ausführungsformen ist vorgesehen, dass die Abhängigkeit des Potentials des ersten Schaltungsknotenpunkts von der Pumpspannung über eine bzw. die Kennlinie gesteuert wird, insbesondere digital, z.B. unter Verwendung einer Recheneinrichtung, die die Kennlinie in Abhängigkeit eines ermittelten Werts für den momentanen Spannungsabfall an der Pumpzelle auswertet, um den ersten Sollwert zu ermitteln.

Es ist vorgesehen, dass für einen ersten Wertebereich des Spannungsabfalls über der Pumpzelle dem ersten Sollwert ein, insbesondere konstanter, erster Wert zugeordnet wird. Bei weiteren bevorzugten Ausführungsformen kann der erste Wertebereich ein zusammenhängender Wertebereich sein. Bei weiteren bevorzugten Ausführungsformen kann der erste Wertebereich ein nicht zusammenhängender Wertebereich sein, mithin mehrere Teilbereiche aufweisen. Damit kann beispielsweise bewirkt werden, dass in einem Bereich um λ = 1 (z.B. entsprechend dem ersten Wertebereich) das Potential des ersten Schaltungsknotenpunkts fix bleibt, da in diesem Bereich der Spannungsabfall an der Pumpzelle nicht groß ist.

Es ist vorgesehen, dass für einen zweiten Wertebereich des Spannungsabfalls über der Pumpzelle dem ersten Sollwert ein in Abhängigkeit des Werts des Spannungsabfalls, veränderlicher zweiter Wert zugeordnet wird. Bei weiteren bevorzugten Ausführungsformen kann der zweite Wertebereich ein zusammenhängender Wertebereich sein. Bei weiteren bevorzugten Ausführungsformen kann der zweite Wertebereich ein nicht zusammenhängender Wertebereich sein, mithin mehrere Teilbereiche aufweisen. Durch den veränderlichen zweiten Wert kann vorteilhaft eine Anpassung des Potentials des ersten Schaltungsknotenpunkts an einen gegenüber z.B. dem Betriebszustand λ = 1 veränderten Betriebszustand erfolgen.

Bei weiteren bevorzugten Ausführungsformen ist vorgesehen, dass der zweite Wert in Abhängigkeit des Werts des Spannungsabfalls linear veränderlich ist, wobei insbesondere eine Steigung der linearen Veränderung des zweiten Werts in Abhängigkeit des Werts des Spannungsabfalls negativ ist, insbesondere den Wert -1 aufweist. Damit kann das Potential des ersten Schaltungsknotenpunkts z.B. mit steigendem Spannungsabfall an der Pumpzelle in einem der Steigung entsprechenden Maß verringert werden, wodurch stets ein zuverlässiger Betrieb der Breitband-Lambdasonde und insbesondere auch der aktuell aktiven Stromquelle sichergestellt ist, insbesondere obwohl die ggf. einzige vorhandene positive Versorgungsspannung für die Breitband-Lambdasonde und die Stromquellen vergleichsweise klein ist, z.B. 5 Volt.

Bei weiteren bevorzugten Ausführungsformen ist vorgesehen, dass für einen dritten Wertebereich des Spannungsabfalls über der Pumpzelle dem ersten Sollwert ein in Abhängigkeit des Werts des Spannungsabfalls veränderlicher dritter Wert zugeordnet wird. Bei weiteren bevorzugten Ausführungsformen kann der dritte Wertebereich ein zusammenhängender Wertebereich sein. Bei weiteren bevorzugten Ausführungsformen kann der dritte Wertebereich ein nicht zusammenhängender Wertebereich sein, mithin mehrere Teilbereiche aufweisen. Bei weiteren bevorzugten Ausführungsformen ist vorgesehen, dass der dritte Wert in Abhängigkeit des Werts des Spannungsabfalls linear veränderlich ist, wobei insbesondere eine Steigung der linearen Veränderung des dritten Werts in Abhängigkeit des Werts des Spannungsabfalls positiv ist, insbesondere den Wert 1 aufweist. Damit kann das Potential des ersten Schaltungsknotenpunkts z.B. mit steigendem Spannungsabfall an der Pumpzelle in einem der Steigung entsprechenden Maß erhöht werden, wodurch stets ein zuverlässiger Betrieb der Breitband-Lambdasonde und insbesondere auch der aktuell aktiven Stromquelle sichergestellt ist.

Weitere bevorzugte Ausführungsformen beziehen sich auf eine Vorrichtung zum Betreiben einer Breitband-Lambdasonde gemäß Anspruch 6.

Bei weiteren bevorzugten Ausführungsformen ist die Vorrichtung zur Ausführung des Verfahrens gemäß den Ausführungsformen ausgebildet.

Bei weiteren bevorzugten Ausführungsformen weist die Vorrichtung eine Recheneinrichtung und eine der Recheneinrichtung zugeordnete Speichereinrichtung auf, wobei die Vorrichtung dazu ausgebildet ist, eine bzw. die Kennlinie, die eine vorgebbare Abhängigkeit des ersten Sollwerts von dem Spannungsabfall über der Pumpzelle aufweist, zumindest zeitweise mittels der Speichereinrichtung zu speichern.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Der Schutzumfang der Erfindung wird durch die beigefügten Ansprüche definiert.

In der Zeichnung zeigt:
- Figur 1: schematisch ein vereinfachtes Blockdiagramm einer Vorrichtung gemäß bevorzugten Ausführungsformen,
- Figur 2: schematisch einen Strom einer Stromquelle gemäß weiteren bevorzugten Ausführungsformen aufgetragen über einer Spannung,
- Figur 3: schematisch ein vereinfachtes Flussdiagramm eines Verfahrens gemäß weiteren bevorzugten Ausführungsformen,
- Figur 4: schematisch ein vereinfachtes Blockdiagramm einer Vorrichtung gemäß weiteren bevorzugten Ausführungsformen,
- Figur 5: schematisch eine Kennlinie gemäß weiteren bevorzugten Ausführungsformen, und
- Figur 6: schematisch ein vereinfachtes Blockdiagramm einer Vorrichtung gemäß weiteren bevorzugten Ausführungsformen.

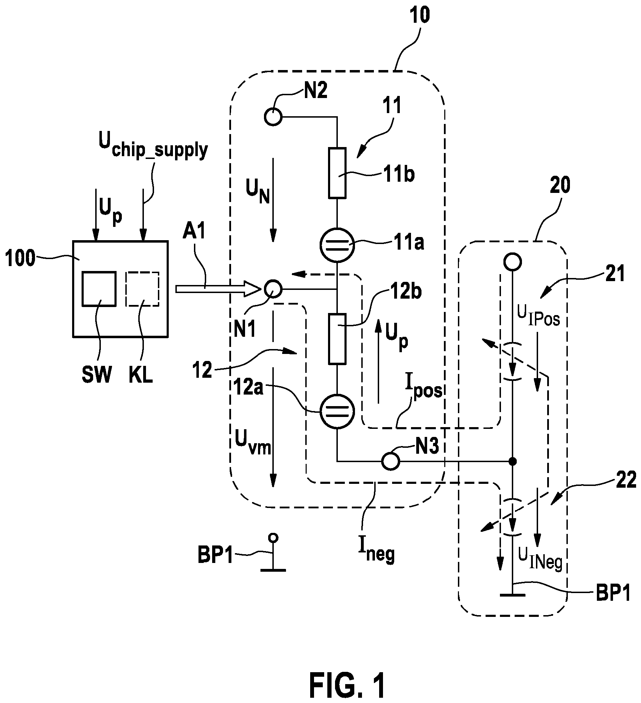

Figur 1 zeigt schematisch ein vereinfachtes Blockdiagramm einer Vorrichtung 100 zum Betreiben einer Breitband-Lambdasonde 10 gemäß bevorzugten Ausführungsformen. Die Breitband-Lambdasonde 10 ist vorliegend mittels eines elektrischen Ersatzschaltbilds illustriert und weist eine Nernstzelle 11 und eine Pumpzelle 12 auf, die über den ersten Schaltungsknotenpunkt N1 elektrisch zueinander in Serie geschaltet sind. Vorliegend ist die Nernstzelle 11 durch eine Spannungsquelle 11a und einen ihr zugeordneten Innenwiderstand 11b repräsentiert, und die Pumpzelle 12 ist durch eine Spannungsquelle 12a und einen ihr zugeordneten Innenwiderstand 12b repräsentiert.

Wie ebenfalls aus Fig. 1 ersichtlich, weist die Serienschaltung der Nernstzelle 11 und der Pumpzelle 12 äußere elektrische Anschlüsse (Zweipol) auf, die durch den zweiten Schaltungsknotenpunkt N2 und den dritten Schaltungsknotenpunkt N3 repräsentiert sind. Im Betrieb fällt an der Nernstzelle 11, also zwischen den Schaltungsknotenpunkten N2, N1, eine Spannung U_{N} ab, die auch als Nernstspannung bezeichnet werden kann, und an der Pumpzelle 12, also zwischen den Schaltungsknotenpunkten N1, N3, fällt eine Spannung Up ab, die auch als Pumpspannung bezeichnet werden kann.

Bei weiteren bevorzugten Ausführungsformen weist die Breitband-Lambdasonde 10 beispielsweise einen Aufbau auf, wie er beispielhaft in der Figur 1 der DE 10 2013 220 756 A1 gezeigt ist.

Bei weiteren bevorzugten Ausführungsformen kann der erste Schaltungsknotenpunkt N1 gemäß Fig. 1 als innere Pumpelektrode ("IPE"), der zweite Schaltungsknotenpunkt N2 als Referenzelektrode ("RE") und der dritte Schaltungsknotenpunkt N3 als äußere Pumpelektrode ("APE") bezeichnet werden.

Bei weiteren bevorzugten Ausführungsformen wird mittels der Breitband-Lambdasonde 10, insbesondere bei Anwendungen im Kraftfahrzeugbereich, ein Lambdawert (Verbrennungsluftverhältnis) aus einem elektrischen Strom, der durch die Zellen 11, 12 fließt, ermittelt. Bei weiteren bevorzugten Ausführungsformen wird der Strom durch die Pumpzelle dabei z.B. mittels eines sog. Pumpstromreglers (nicht gezeigt) so eingeregelt, dass an der Nernstzelle 450 mV, Millivolt, gemessen werden kann, mithin einen Nernstspannung U_{N} von 450 mV an der Nernstzelle 11 abfällt. Je nachdem, ob fettes oder mageres Abgas an der Breitband-Lambdasonde 10 anliegt, kann gemäß weiteren bevorzugten Ausführungsformen der Strom in positiver oder negativer Richtung durch die Sonde bzw. ihre Pumpzelle 12 getrieben werden. Hierfür kann bei weiteren bevorzugten Ausführungsformen wenigstens eine Stromquelle vorgesehen sein.

Bei weiteren bevorzugten Ausführungsformen ist eine Stromversorgungseinrichtung 20 vorgesehen, die dazu ausgebildet ist, die Pumpzelle 12 für den Betrieb der Breitband-Lambdasonde 10 mit einem Betriebsstrom gewünschter Polarität zu bestromen. Hierzu weist die Stromversorgungseinrichtung 20 bei weiteren bevorzugten Ausführungsformen eine erste Stromquelle 21 auf, die dazu ausgebildet ist, die Pumpzelle 12 mit einem Betriebsstrom erster Stromrichtung, insbesondere einem positiven Strom Ipos, zu bestromen, und eine zweite Stromquelle 22, die dazu ausgebildet ist, die Pumpzelle 12 mit einem Betriebsstrom zweiter Stromrichtung (entgegengesetzt zu der ersten Stromrichtung), insbesondere einem negativen Strom Ineg, zu bestromen, vgl. die entsprechend bezeichneten gestrichelten Pfeile. Bei weiteren bevorzugten Ausführungsformen kann die erste Stromquelle 21 somit auch als "positive Stromquelle" 21 und die zweite Stromquelle 22 somit auch als negative Stromquelle" 22 bezeichnet werden.

Bei weiteren bevorzugten Ausführungsformen wird für einen Betrieb der Breitband-Lambdasonde 10 eine (einzige) positive Betriebsspannung Uchip_supply bereitgestellt, die insbesondere bei Anwendungen im Kraftfahrzeugbereich beispielsweise aus einer Bordnetzspannung des Kraftfahrzeugs ableitbar ist. Um dennoch die Breitband-Lambdasonde 10 je nach Betriebszustand mit einem positiven oder einem negativen Betriebsstrom Ipos, Ineg versorgen zu können, sind bei bevorzugten Ausführungsformen die beiden vorstehend beschriebenen Stromquellen 21, 22 vorgesehen. Zusätzlich ist bei weiteren bevorzugten Ausführungsformen eine Bezugselektrode (z.B. in Form des ersten Schaltungsknotenpunkts N1) vorgesehen, mittels der, insbesondere wahlweise, Ströme Ipos, Ineg in beide Richtungen durch die Pumpzelle 12 getrieben werden können. Hierzu ist die Bezugselektrode bei weiteren bevorzugten Ausführungsformen mit dem ersten Schaltungsknotenpunkt N1 verbindbar, der bei weiteren bevorzugten Ausführungsformen insbesondere einem ersten Anschluss der Pumpzelle 12 entspricht. Ein zweiter Anschluss der Pumpzelle 12 ist bei weiteren bevorzugten Ausführungsformen, insbesondere wahlweise, mit der bzw. den Stromquellen 21, 22 verbindbar. Die Bezugselektrode kann bei weiteren bevorzugten Ausführungsformen auch als "virtuelle Masseelektrode" bezeichnet werden.

Bei weiteren bevorzugten Ausführungsformen ist vorgesehen, dass die Bezugselektrode bzw. der erste Schaltungsknotenpunkt N1 zeitweise auf ein elektrisches Potential gelegt wird, das z.B. zumindest etwa der halben Betriebsspannung Uchip_supply ("Chip-Versorgung"), bezogen auf ein erstes Bezugspotential BP1, beispielsweise das (reale) Massepotential, entspricht. Somit kann sowohl die negative Stromquelle 22, als auch die positive Stromquelle 21 (wahlweise, insbesondere zeitlich abwechselnd) Ströme Ipos, Ineg durch die Pumpzelle 12 treiben. Bei weiteren bevorzugten Ausführungsformen ist vorgesehen, dass die positive Betriebsspannung Uchip_supply, mit der z.B. auch die Vorrichtung 100 für ihren Betrieb versorgt wird, z.B. 5 Volt beträgt.

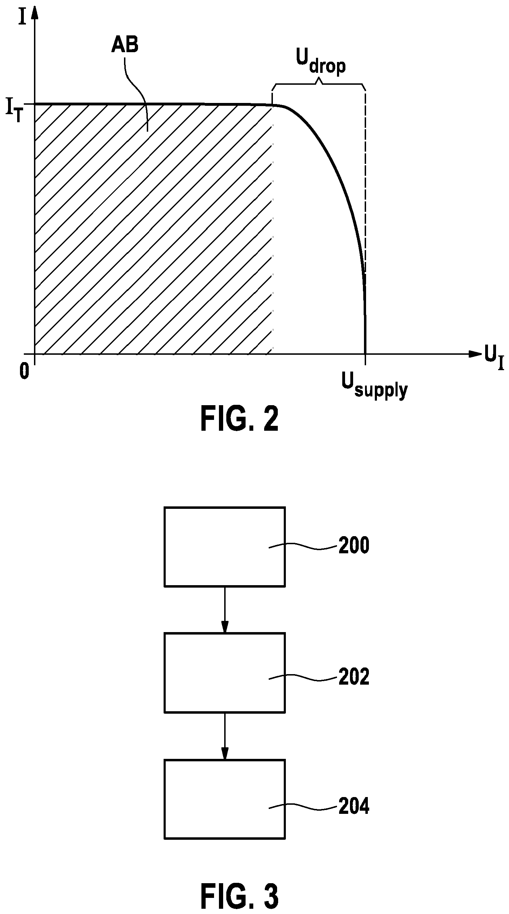

Untersuchungen der Anmelderin zufolge benötigen reale Stromquellen 21, 22 bei weiteren bevorzugten Ausführungsformen einen nichtverschwindenden Spannungsabfall Udrop über der (Strom-)Quelle, um einen Strom treiben zu können. Dies ist schematisch in Fig. 2 gezeigt, in der ein Strom I einer realen Stromquelle über einer Spannung U_{I} aufgetragen ist. Ein Arbeitsbereich der realen Stromquelle ist in Fig. 2 mit dem Bezugszeichen AB bezeichnet, und eine Versorgungsspannung mit dem Bezugszeichen Usupply. Aus Fig. 2 ist ersichtlich, dass sich, ausgehend von einem Strom I=0 bei der Spannung Usupply, der genannte Spannungsabfall Udrop einstellt, wenn der Strom I bis zu dem Zielwert I_{T} ansteigt. Bei weiteren bevorzugten Ausführungsformen beträgt der Spannungsabfall Udrop beispielsweise 1 Volt (V). Bei weiteren bevorzugten Ausführungsformen kann beispielsweise das Betriebsverhalten wenigstens einer der Stromquellen 21, 22 der Stromversorgungseinrichtung 20 zumindest näherungsweise durch das Diagramm der Fig. 2 beschrieben werden.

Weiteren Untersuchungen der Anmelderin zufolge fällt bei einem Stromfluss durch die Pumpzelle 12 (Fig. 1) eine Spannung ab. Bei weiteren bevorzugten Ausführungsformen kann dieser Spannungsabfall über dem Pumpzelle 12 je nach Konfiguration der Breitband-Lambdasonde 10 bzw. der Pumpzelle 12 maximal etwa 2,5 V betragen.

Bei weiteren bevorzugten Ausführungsformen ist vorgesehen, dass, insbesondere im Falle eines negativen Betriebsstroms bzw. Pumpstroms Ineg durch die Pumpzelle 12, die Spannung Uvm an der Bezugselektrode bzw. dem ersten Schaltungsknotenpunkt N1, bezogen auf das erste Bezugspotential BP1, insbesondere Massepotential, größer gleich einer Summe aus dem Spannungsabfall Up- an der Pumpzelle 12 (im Falle des negativen Betriebsstroms Ineg) und dem Spannungsabfall Udrop- an der negativen Stromquelle 22 ist, Uvm >= Up- + Udrop-, wodurch sichergestellt ist, dass die (reale) negative Stromquelle 22 einen Strom treiben kann.

Bei weiteren bevorzugten Ausführungsformen ist vorgesehen, dass, insbesondere im Falle eines positiven Betriebsstroms bzw. Pumpstroms Ipos durch die Pumpzelle 12, die Spannung Uvm an der Bezugselektrode bzw. dem ersten Schaltungsknotenpunkt N1, bezogen auf das erste Bezugspotential BP1, insbesondere Massepotential, kleiner gleich einer Differenz aus der (insbesondere einzigen) positiven Betriebsspannung Uchip_supply, dem Spannungsabfall Up+ an der Pumpzelle 12 (im Falle des positiven Betriebsstroms) und dem Spannungsabfall Udrop+ an der positiven Stromquelle 21 ist, Uvm <= Uchip_supply - Udrop+ - Up+, wodurch sichergestellt ist, dass die (reale) positive Stromquelle 21 einen Strom treiben kann.

Bei weiteren bevorzugten Ausführungsformen kann für den Betrieb der Breitband-Lambdasonde 10 sowohl mit negativem als auch mit positivem Betriebsstrom - unter Verwendung der vorstehend beispielhaft genannten Werte für die Spannungsabfälle - die positive Versorgungspannung wie folgt gewählt werden: Up- + Udrop- = Uchip_supply - Udrop+ - Up+, was auf Uchip_supply = Up- + Udrop- - Udrop+ - Up+ führt, also mit o.g. Beispielwerten: Uchip_supply = 2,5 V + 1 V + 1 V + 2,5 V = 7 V, was ersichtlich höher ist als eine typischerweise verfügbare Versorgungsspannung für Recheneinrichtungen von z.B. 5 Volt. Bei weiteren bevorzugten Ausführungsformen kann demnach die Versorgungsspannung für die Breitband-Lambdasonde 10 bzw. die sie speisenden Stromquellen 21, 22 (insbesondere positiv und negativ) zu 7 V gewählt werden, wobei die Versorgungsspannung ggf. aus der typischerweise verfügbaren Versorgungsspannung Uchip_supply von z.B. 5 V erzeugt wird.

Um zu vermeiden, dass eine gesonderte Versorgungsspannung für die Breitband-Lambdasonde 10 (von z.B. 7 Volt) vorgesehen werden muss, die insbesondere größer ist, als eine ggf. bereits vorhandene "Logikspannung" Uchip_supply von z.B. 5 V, und um dennoch eine zuverlässigen Betrieb der Breitband-Lambdasonde 10 und insbesondere auch der ihr zugeordneten Stromquellen 21, 22 sicherzustellen, ist bei weiteren bevorzugten Ausführungsformen vorgesehen, dass die Vorrichtung 100 (Fig. 1) das nachfolgend unter Bezugnahme auf Fig. 3 beschriebene Verfahren ausführt, das folgende Schritte aufweist: Ermitteln 200 eines Spannungsabfalls Up (Fig. 1, "Pumpspannung") über der Pumpzelle 12, Ermitteln 202 (Fig. 3) eines ersten Sollwerts SW (Fig. 1) für das elektrische Potential des ersten Schaltungsknotenpunkts N1 in Abhängigkeit des Spannungsabfalls Up über der Pumpzelle 12, Beaufschlagen 204 (Fig. 3) des ersten Schaltungsknotenpunkts N1 mit dem ersten Sollwert SW, was in Fig. 1 durch den Blockpfeil A1 angedeutet ist. Dadurch wird der erste Schaltungsknotenpunkt N1, der zwischen der Nernstzelle 11 und der Pumpzelle 12 liegt bzw. diese Zellen 11, 12 miteinander verbindet, mit einem dem ersten Sollwert SW1 entsprechenden elektrischen Potential, das von dem Spannungsabfall Up über der Pumpzelle abhängt, beaufschlagt. Dies ermöglicht eine effiziente Nutzung einer ggf. bereits vorhandenen elektrischen Versorgungsspannung Uchip_supply und einen effizienten Betrieb von einer oder mehreren Stromquellen 21, 22 zur Versorgung der Breitband-Lambdasonde 10 mit einem Betriebsstrom Ipos, Ineg. Gegenüber einem permanenten Belassen des ersten Schaltungsknotenpunkts N1 auf einem konstanten elektrischen Potential, das z.B. der halben Versorgungsspannung Uchip_supply entspricht, und das somit für einen gewünschten Betriebsbereich der Breitband-Lambdasonde 10 bzw. ihrer Stromquellen 21, 22 zumindest bei weiteren bevorzugten Ausführungsformen ggf. nicht ausreicht, vgl. die obige Beispielsrechnung, derzufolge für manche Ausführungsformen z.B. 7 Volt als Versorgungsspannung und somit z.B. 3,5 V als "halbe Versorgungsspannung" für den ersten Schaltungsknotenpunkt vorzusehen wären, kann somit gemäß weiteren bevorzugten Ausführungsformen der erste Schaltungsknotenpunkt N1 in Abhängigkeit von dem Spannungsabfall Up über der Pumpzelle 12 wahlweise (z.B. zu unterschiedlichen Zeiten, die z.B. unterschiedlichen Betriebszuständen der Breitband-Lambdasonde 10 und damit entsprechenden Spannungsabfällen Up entsprechen) auf verschiedene elektrische Potentiale gelegt bzw. mit verschiedenen elektrischen Potentialen beaufschlagt werden. Dies ermöglicht vorteilhaft die Nutzung einer (einzigen) positiven Versorgungsspannung von z.B. 5 V (insbesondere kleiner als die gemäß obiger Beispielsrechnung ermittelten 7 V) und ermöglicht ferner gleichzeitig, dennoch genug Spannung für einen zuverlässigen Betrieb der Breitband-Lambdasonde 10 und die ihr zugeordneten Stromquellen 21, 22 bereitstellen. Mit anderen Worten ist bei weiteren bevorzugten Ausführungsformen vorgesehen, dass die Breitband-Lambdasonde 10 und/oder die ihr zugeordnete Stromversorgungseinrichtung 20 und/oder die Vorrichtung 100, insbesondere alle, mit einer (bevorzugt einzigen) positiven Versorgungsspannung Uchip_supply von z.B. 5 V, betrieben werden.

Weitere bevorzugten Ausführungsformen nutzen vorteilhaft aus, dass die Spannung Up an der Pumpzelle 12 je nach Betriebszustand (insbesondere Strom und Gas) der Breitband-Lambdasonde 10 positiv oder negativ ist, und dass somit insbesondere je nach der momentanen Luftzahl λ entweder die positive oder die negative Stromquelle aktiv ist, nicht jedoch beide Stromquellen 21, 22 gleichzeitig.

Dies erlaubt Untersuchungen der Anmelderin zufolge, bei weiteren bevorzugten Ausführungsformen das elektrische Potential der Bezugselektrode ("virtuelle Masse"), also des ersten Schaltungsknotenpunkts N1 zwischen der Nernstzelle 11 und der Pumpzelle 12, variabel zu gestalten, insbesondere das Potential des ersten Schaltungsknotenpunkts N1 je nach Stromrichtung und Zellspannung Up der Pumpzelle 12 zu verändern.

Bei weiteren bevorzugten Ausführungsformen ist vorgesehen, den Ablauf 200, 202, 204 gemäß Fig. 3 zumindest zeitweise zu wiederholen, insbesondere periodisch auszuführen.

Weiteren Untersuchungen der Anmelderin zufolge, kann es an (insbesondere parasitären) Kapazitäten von Leitungen und/oder Anschlüssen und/oder sonstigen Komponenten der Breitband-Lambdasonde wie z.B. der Nernstzelle und der Pumpzelle ("Leitungs-, Pin- und Sondenkapazitäten") zu Umladeströmen kommen, wenn das Potential des ersten Schaltungsknotenpunkts N1 verändert wird. Solche Umladeströme können u.U. das Sensormessergebnis der Breitband-Lambdasonde 10 beeinflussen. Daher ist bei weiteren bevorzugten Ausführungsformen vorgesehen, das Potential des ersten Schaltungsknotenpunkts N1 insbesondere dann (vorzugsweise nur dann) zu verändern, wenn auch Bedarf besteht, also z.B. dann, wenn die Zellspannung Up z.B. der Pumpzelle 12 so groß wird, dass die momentan aktive (insbesondere positive oder negative) Stromquelle 21, 22 nicht mehr genügend Spannungsabfall hat.

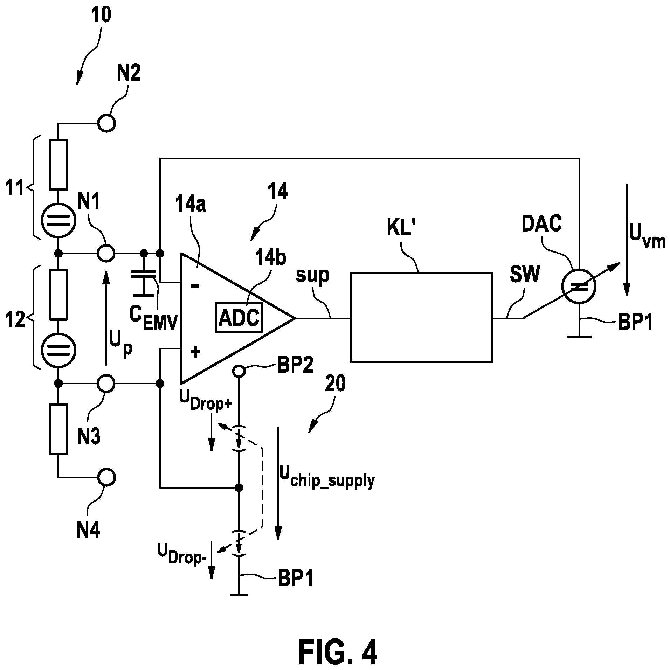

Figur 4 zeigt hierzu schematisch ein Blockschaltbild gemäß weiteren bevorzugten Ausführungsformen. Abgebildet ist die Breitband-Lambdasonde 10, repräsentiert durch ein Ersatzschaltbild ihrer Nernstzelle 11 und ihrer Pumpzelle 12 mit den bereits beschriebenen Schaltungsknotenpunkten N1, N2, N3. Ebenfalls abgebildet ist die Stromversorgungseinrichtung 20, die vorliegend zwischen einem zweiten Bezugspotential BP2 und dem ersten Bezugspotential BP1 (Massepotential) geschaltet ist, wobei das erste Bezugspotential BP1 der gemeinsamen Betriebsspannung Uchip_supply von z.B. 5 V entspricht. Weiter aus Fig. 4 ersichtlich ist ein kapazitives Element C_{EMV}.

Bei weiteren bevorzugten Ausführungsformen kann zwischen den Schaltungsknotenpunkten N3, N4 auch ein optionaler Trimmwiderstand vorgesehen sein, der vorliegend nicht näher bezeichnet ist. Bei weiteren bevorzugten Ausführungsformen kann der Widerstandswert des optionalen Trimmwiderstands z.B. je nach Toleranz der Lambdasonde festgelegt werden, bevorzugt während der Fertigung der Lambdasonde bzw. des sie enthaltenden Systems. Bei weiteren bevorzugten Ausführungsformen kann für den Betrieb der Lambdasonde der Widerstandswert des optionalen Trimmwiderstands ausgelesen bzw. ermittelt und bei einer Auswertung der Messwerte entsprechend berücksichtigt werden.

Bei weiteren bevorzugten Ausführungsformen ist ein Einrichtung 14 vorgesehen, die dazu ausgebildet ist die Pumpspannung Up zu ermitteln und hierzu beispielsweise einen Differenzverstärker 14a aufweist. Optional ist ein Analog-Digital-Wandler ("ADC") 14b vorgesehen, der mittels des Differenzverstärkers 14a ermittelte analoge Werte für die Pumpspannung Up in die digitale Domäne, insbesondere in ein zeit- und wertediskretes Pumpspannungssignal sup, transformiert.

Bei weiteren bevorzugten Ausführungsformen ist vorgesehen, dass das Ermitteln des ersten Sollwerts SW (Fig. 1) in Abhängigkeit einer Kennlinie KL ausgeführt wird, wobei insbesondere die Kennlinie KL eine vorgebbare Abhängigkeit des ersten Sollwerts SW von dem Spannungsabfall Up über der Pumpzelle 12 aufweist.

Bei weiteren bevorzugten Ausführungsformen, vgl. Fig. 4, kann aus dem Signal sup z.B. der genannte erste Sollwert SW ermittelt werden, vgl. Schritt 202 aus Fig. 3, was bei Fig. 4 beispielhaft mittels einer Kennlinie KL` (vgl. auch die Kennlinie KL aus Fig. 1) ausgeführt wird.

Bei weiteren bevorzugten Ausführungsformen wird der erste Sollwert SW mittels eines Digital-Analog-Wandlers DAC in ein analoges Signal transformiert, das beispielsweise mit dem dem ersten Sollwert SW entsprechenden elektrischen Potential korrespondiert und an den ersten Schaltungsknotenpunkt N1 angelegt wird. Dies entspricht vorliegend beispielhaft der Spannung Uvm. Bei diesen Ausführungsformen kann somit der erste Schaltungsknotenpunkt N1 in Abhängigkeit von dem Spannungsabfall Up über der Pumpzelle 12 mittels der Spannung Uvm auf ein vorgebbares elektrisches Potential gelegt werden, welches sich insbesondere während des Betriebs der Breitband-Lambdasonde 10 (insbesondere in Abhängigkeit von dem Spannungsabfall Up über der Pumpzelle 12) ändern kann, wodurch stets eine zuverlässige Messung der Luftzahl mittels der Breitband-Lambdasonde 10 erfolgen kann. Gleichzeitig ist ein effizienter Betrieb der Breitband-Lambdasonde 10 und der Vorrichtung 100 (Fig. 1) mit einer einzigen gemeinsamen Versorgungsspannung Uchip_supply möglich.

Bei weiteren bevorzugten Ausführungsformen sind ein oder mehrere, bevorzugt alle, der Komponenten 14, 14a, 14b, KL, KL`, DAC in die Vorrichtung 100 (Fig. 1) integriert, insbesondere auf einem gemeinsamen Halbleitersubstrat angeordnet. Bei weiteren bevorzugten Ausführungsformen kann insbesondere die Kennlinie KL, KL` ggf. auch aus einer externen Quelle (z.B. angeschlossener Mikrocontroller) erhalten werden.

Bei weiteren bevorzugten Ausführungsformen ist vorgesehen, dass die Abhängigkeit des Potentials des ersten Schaltungsknotenpunkts N1 von der Pumpspannung Up (z.B. repräsentiert durch die Einstellung der Spannung Uvm in Abhängigkeit der Pumpspannung Up) über eine bzw. die Kennlinie KL, KL` gesteuert wird, insbesondere digital, z.B. unter Verwendung einer Recheneinrichtung, die die Kennlinie KL, KL` in Abhängigkeit eines (z.B. mittels des ADC 14b) ermittelten Werts für den momentanen Spannungsabfall an der Pumpzelle 12 auswertet, um den ersten Sollwert SW zu ermitteln.

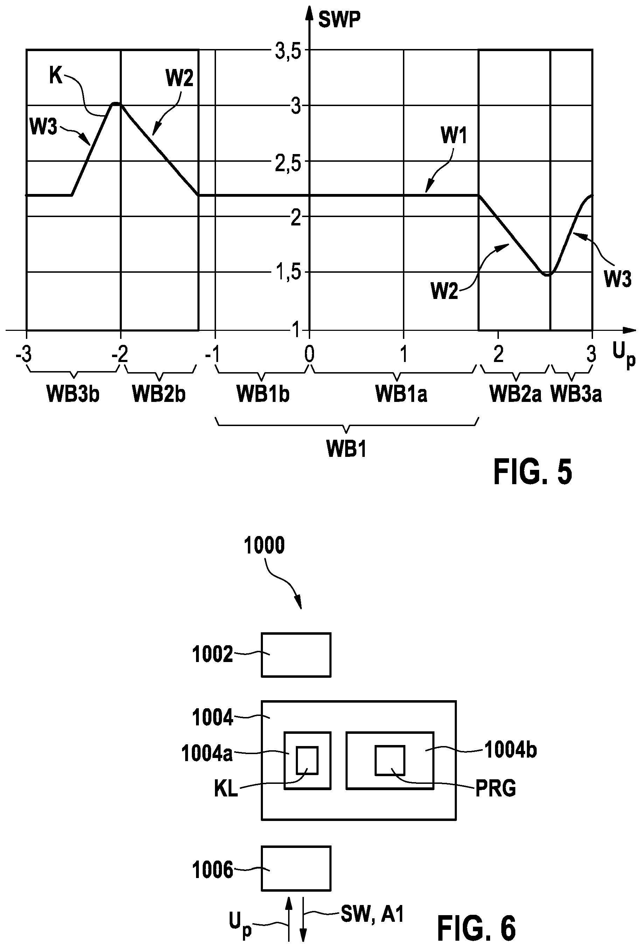

Es ist vorgesehen, vgl. Fig. 5, dass für einen ersten Wertebereich WB1 des Spannungsabfalls Up über der Pumpzelle 12 dem ersten Sollwert SW (Fig. 1) ein konstanter erster Wert W1 zugeordnet wird, vgl. die Kurve K, die bei weiteren bevorzugten Ausführungsformen als Kennlinie KL, KL` verwendbar ist. Die Kurve K repräsentiert einen Sollwert SWP für das Potential des ersten Schaltungsknotenpunkts N1 in Abhängigkeit von der Pumpspannung Up. Bei weiteren bevorzugten Ausführungsformen kann der erste Wertebereich WB1 wie in Fig. 5 gezeigt ein zusammenhängender Wertebereich sein, der vorliegend einen ersten Teilbereich WB1a (positive Werte der Pumpspannung Up (Fig. 1) bzw. Nutzung eines positiven Betriebsstroms Ipos für den Betrieb der Pumpzelle 12) und einen zweiten Teilbereich WB1b (negative Werte der Pumpspannung Up (Fig. 1) bzw. Nutzung eines negativen Betriebsstroms Ineg für den Betrieb der Pumpzelle 12) aufweist. Bei weiteren bevorzugten Ausführungsformen kann der erste Wertebereich WB1 auch ein nicht zusammenhängender Wertebereich (nicht gezeigt) sein, mithin mehrere insbesondere nicht direkt aneinandergrenzende Teilbereiche aufweisen. Durch den konstanten ersten Wert W1 kann beispielsweise bewirkt werden, dass in einem Bereich um λ = 1 (z.B. entsprechend dem ersten Wertebereich WB1) das Potential des ersten Schaltungsknotenpunkts N1 fix (also konstant auf dem ersten Wert W1) bleibt, da in diesem Bereich WB1 der Spannungsabfall Up an der Pumpzelle 12 nicht groß bzw. vergleichsweise klein ist. Dadurch entfällt vorteilhaft ein Umladen von ggf. vorhandenen Kapazitäten C_{EMV}, was die Präzision steigert.

Es ist vorgesehen, vgl. die Kurve K aus Fig. 5, dass für einen zweiten Wertebereich WB2 des Spannungsabfalls Up über der Pumpzelle dem ersten Sollwert SW ein in Abhängigkeit des Werts des Spannungsabfalls Up, veränderlicher zweiter Wert W2 zugeordnet wird. Bei weiteren bevorzugten Ausführungsformen kann der zweite Wertebereich WB2 ein zusammenhängender Wertebereich sein (nicht gezeigt). Bei weiteren bevorzugten Ausführungsformen kann der zweite Wertebereich WB2 ein nicht zusammenhängender Wertebereich sein, mithin mehrere Teilbereiche WB2a, WB2b aufweisen. Durch den veränderlichen zweiten Wert W2 kann vorteilhaft eine Anpassung des Potentials des ersten Schaltungsknotenpunkts N1 (Fig. 1, 4) an einen gegenüber z.B. dem Betriebszustand λ = 1 veränderten Betriebszustand der Breitband-Lambdasonde 10 erfolgen.

Bei weiteren bevorzugten Ausführungsformen ist vorgesehen, dass der zweite Wert W2 in Abhängigkeit des Werts des Spannungsabfalls Up linear veränderlich ist, wobei insbesondere eine Steigung der linearen Veränderung des zweiten Werts in Abhängigkeit des Werts des Spannungsabfalls negativ ist, insbesondere den Wert -1 aufweist. Damit kann das Potential des ersten Schaltungsknotenpunkts N1 z.B. mit steigendem Spannungsabfall Up an der Pumpzelle 12 in einem der Steigung entsprechenden Maß verringert werden, wodurch stets ein zuverlässiger Betrieb der Breitband-Lambdasonde 10 und insbesondere auch der aktuell aktiven Stromquelle 21 oder 22 sichergestellt ist, insbesondere obwohl die ggf. einzige vorhandene positive Versorgungsspannung Uchip_supply für die Breitband-Lambdasonde 10 und die Stromquellen 21, 22 vergleichsweise klein ist, z.B. 5 Volt.

Bei weiteren bevorzugten Ausführungsformen ist vorgesehen, dass für einen dritten Wertebereich WB3 des Spannungsabfalls Up über der Pumpzelle 12 dem ersten Sollwert SW ein in Abhängigkeit des Werts des Spannungsabfalls Up veränderlicher dritter Wert W3 zugeordnet wird. Bei weiteren bevorzugten Ausführungsformen kann der dritte Wertebereich WB3 ein zusammenhängender Wertebereich (nicht gezeigt) sein. Bei weiteren bevorzugten Ausführungsformen kann der dritte Wertebereich WB3 ein nicht zusammenhängender Wertebereich sein, mithin mehrere Teilbereiche WB3a, WB3b aufweisen.

Bei weiteren bevorzugten Ausführungsformen ist vorgesehen, dass der dritte Wert W3 in Abhängigkeit des Werts des Spannungsabfalls Up linear veränderlich ist, wobei insbesondere eine Steigung der linearen Veränderung des dritten Werts W3 in Abhängigkeit des Werts des Spannungsabfalls Up positiv ist, insbesondere den Wert 1 aufweist. Damit kann das Potential des ersten Schaltungsknotenpunkts z.B. mit steigendem Spannungsabfall Up an der Pumpzelle 12 in einem der Steigung entsprechenden Maß erhöht werden, wodurch stets ein zuverlässiger Betrieb der Breitband-Lambdasonde 10 und insbesondere auch der aktuell aktiven Stromquelle 21 oder 22 sichergestellt ist.

Figur 6 zeigt schematisch ein vereinfachtes Blockdiagramm einer Vorrichtung 1000 gemäß weiteren bevorzugten Ausführungsformen. Beispielsweise kann die Vorrichtung 100 aus Fig. 1 die Konfiguration 1000 gemäß Fig. 6 aufweisen. Die Vorrichtung 1000 weist wenigstens eine Recheneinrichtung 1002 auf, wenigstens eine der Recheneinrichtung 1002 zugeordnete Speichereinrichtung 1004 zur zumindest zeitweisen Speicherung eines Computerprogramms PRG, wobei das Computerprogramm PRG insbesondere zur Steuerung eines Betriebs der Vorrichtung 100, 1000 und/oder zur Ausführung des Verfahrens gemäß den Ausführungsformen ausgebildet ist.

Bei weiteren bevorzugten Ausführungsformen weist die Recheneinrichtung 1002 wenigstens eines der folgenden Elemente auf: einen Mikroprozessor, einen Mikrocontroller, einen digitalen Signalprozessor (DSP), einen programmierbaren Logikbaustein (z.B. FPGA, field programmable gate array), einen ASIC (anwendungsspezifischen integrierten Schaltkreis). Kombinationen hieraus sind bei weiteren bevorzugten Ausführungsformen auch denkbar.

Bei weiteren bevorzugten Ausführungsformen weist die Speichereinrichtung 1004 wenigstens eines der folgenden Elemente auf: einen flüchtigen Speicher 1004a, insbesondere Arbeitsspeicher (RAM), einen nichtflüchtigen Speicher 1004b, insbesondere Flash-EEPROM. Bevorzugt ist das Computerprogramm PRG in dem nichtflüchtigen Speicher 1004b abgelegt.

Bei weiteren bevorzugten Ausführungsformen ist auch die Kennlinie KL, KL` (Fig. 1, 4) in der Speichereinrichtung 1004 speicherbar, bevorzugt so, dass sie, insbesondere dynamisch (während der Laufzeit der Vorrichtung), änderbar, z.B. an ein Zielsystem (z.B. Breitband-Lambdasonde 10 bzw. ein wenigstens eine Lambdasonde 10 aufweisendes Abgasnachbehandlungssystem und/oder eine Stromversorgungseinrichtung 20 hierfür oder dergleichen) anpassbar ist.

Bei weiteren bevorzugten Ausführungsformen weist die Vorrichtung 1000 eine Schnittstelleneinrichtung 1006 auf, die ein oder mehrere der Komponenten 14, 14a, 14b, KL, KL`, DAC aufweisen bzw. deren Funktionalität implementieren kann bzw. aufweist und/oder implementiert.

Weitere bevorzugte Ausführungsformen beziehen sich auf eine Verwendung des Verfahrens gemäß den Ausführungsformen und/oder der Vorrichtung 100, 1000 gemäß den Ausführungsformen zur Beaufschlagung des ersten Schaltungsknotenpunkts N1 (Fig. 1, 4) der Breitband-Lambdasonde 10 mit einem zeitlich veränderlichen elektrischen Potential, insbesondere (aber ggf. nicht ausschließlich) in Abhängigkeit der Pumpspannung Up.

Unter Verwendung des Prinzips gemäß den Ausführungsformen kann vorteilhaft u.a. eine pumpzellspannungsabhängige Potentialeinstellung des ersten Schaltungsknotenpunkts N1 (der ggf. auch als "virtuelle Masse" bezeichnet werden kann), insbesondere anhand einer Kennlinie KL, erfolgen. Vorteilhaft kann bei weiteren bevorzugten Ausführungsformen eine (insbesondere "Standard"-)Betriebsspannung Uchip_supply für das Steuergerät 100, 1000 bzw. weitere Steuergeräte genutzt werden und gleichzeitig steht auch bei hohen Sondenspannungen bzw. Pumpspannungen Up ein ausreichender Spannungsabfall für die Stromquelle(n) 21, 22 zur Verfügung. Dies spart Kosten, da eine Aufwändige Batteriespannungsaufbereitung, z.B. für eine gesonderte Spannungsversorgung mit einer höheren Spannung (z.B. > 5 V) entfällt.

Bei weiteren bevorzugten Ausführungsformen lassen sich auch die Stromquellen 21, 22 kostengünstiger herstellen als bei konventionellen Systemen, da zur Realisierung der Stromquellen 21, 22, insbesondere bei einer Integration in einen Halbleiterbaustein, insbesondere der Recheneinrichtung 100, 1000 (z.B. in den Schnittstellenbaustein 1006 aus Fig. 6) keine Hochvolttransistoren notwendig sind.

Zudem kann die Vorrichtung 100, 1000 gemäß weiteren bevorzugten Ausführungsformen insbesondere auch bei schwacher (Kfz-)Batterie, z.B. bis hinunter zu Batteriespannungen von 6V, zuverlässig betrieben werden, da die vergleichsweise kleine (einzige) erforderliche Versorgungsspannung Uchip_supply von z.B. 5 V auch in solchen Fällen noch zuverlässig bereitstellbar, insbesondere aus der Batteriespannung ableitbar, ist. Zudem bleibt gemäß weiteren bevorzugten Ausführungsformen das elektrische Potential des ersten Schaltungsknotenpunkts N1 (also die virtuelle Masse) bei vergleichsweise kleinen Strömen (um λ=1) in Ruhe, vgl. den konstanten Wert W1 der Kurve K in dem ersten Wertebereich WB1, so dass ein Messergebnis der Breitband-Lambdasonde 10 nicht gestört wird.

Ein weiterer Vorteil von weiteren bevorzugten Ausführungsformen ist, dass die Tatsache ausgenutzt werden kann, dass die Stromquellen 21, 22 den Strom reduzieren, wenn nicht mehr genügend Spannungsabfall (Udrop zu klein) an den Quellen anliegt (s. auch Fig. 2). Durch geschicktes Auslegen der Kennlinie K, KL, KL` können so bei weiteren bevorzugten Ausführungsformen zu hohe Spannungen an der Breitband-Lambdasonde 10 und damit eine Schädigung/ Schwärzung der Sonde, vermieden werden ("Blackening Schutz").

Nachfolgend sind weitere bevorzugte Ausführungsformen, Aspekte und Vorteile beschrieben, die einzeln für sich oder in beliebiger Kombination miteinander mit wenigstens einer der vorstehend beschriebenen Ausführungsformen kombinierbar sind.

Bei weiteren bevorzugten Ausführungsformen werden die Schritte 200, 202, 204 gemäß Fig. 3 dann, bevorzugt immer dann, ausgeführt, wenn sich die Pumpspannung Up ändert. Sofern z.B. ein Pumpspannungsregler (nicht gezeigt) vorgesehen ist, der ggf. den Betriebsstrom für die Pumpzelle 12 ändert, kann die Ausführung der Schritte 200, 202, 204 z.B. an einen Betriebszyklus des Pumpspannungsreglers gekoppelt werden. Dadurch ist sichergestellt, dass das elektrische Potential des ersten Schaltungsknotenpunkts N1 bzw. die Spannung Uvm immer dann angepasst wird, wenn sich die Pumpspannung Up ändert, also bevorzugt im gleichen Zyklus wie der Pumpstrom geändert wird.

Nachfolgend sind weitere Aspekte zur möglichen Auslegung der Kennlinie K, KL, KL` gemäß weiteren bevorzugten Ausführungsformen aufgeführt. - Die Kennlinie soll bei bevorzugten Ausführungsformen um den Nullpunkt (Up = 0) herum waagerecht verlaufen, was zu einer konstanten Uvm führt. - Es kann vorteilhaft sein, wenn die Formeln ("Bedingung 1") Up + Udrop- + Uvm < Uchip_supply (z.B. für positive Pumpspannung Up) und |Up| + Udrop- < Uvm (für negative Pumpspannung Up) bei weiteren bevorzugten Ausführungsformen für den gesamten Bereich der Pumpspannung Up, für den die Breitband-Lambdasonde 10 ausgelegt ist, erfüllt sind. - Kommt die Summe aus Up + Ui (Spannungsabfall über der Stromquelle 21 oder 22) + Uvm an die Grenze Uchip_supply, kann Uvm gemäß weiteren bevorzugten Ausführungsformen, insbesondere linear, vorzugsweise mit Steigung 1, angepasst werden, wodurch obige "Bedingung 1" erfüllbar ist.

Bei weiteren bevorzugten Ausführungsformen kann eine Korrektur von Umladeströmen, wie sie sich z.B. an dem EMV-Kondensator C_{EMV} (Fig. 4) als Folge der Änderung des Potentials des ersten Schaltungsknotenpunkts N1 ergeben, erfolgen. Wird z.B. das Potential des ersten Schaltungsknotenpunkts N1 bzw. die Spannung Uvm verändert, ändert sich die Ladung des EMV Kondensators C_{EMV}, was zu einem Stromfluss in den Kondensator C_{EMV} führt. Bei manchen bevorzugten Ausführungsformen ist die Vorrichtung 100, 1000 dazu ausgebildet, diesen ("VM"-)Strom zu messen und daraus der Wert der Luftzahl λ zu ermitteln. Der Strom I, der in den Kondensator C_{EMV} fließt, lässt sich über die Formel I = C * dU/dt leicht errechnen. C ist die Pin-Kapazität gegen Masse, dU die Änderung des Potentials bzw. der Spannung Uvm an dem ersten Schaltungsknotenpunkt N1 innerhalb des Zyklus, und dt die Zyklusdauer. Der errechnete Strom I kann dann vorteilhaft von dem durch den ersten Schaltungsknotenpunkt N1 fließenden, ebenfalls messbaren Strom Ivm subtrahiert werden, um den Pumpstrom der Sonde 10 zu ermitteln.

Bei weiteren bevorzugten Ausführungsformen ist ein Einfluss auf den Nernstpannungsregler nicht zu erwarten, da die Nernstspannung U_{N} bevorzugt differentiell zwischen den Schaltungsknotenpunkten N3, N1 ermittelt wird.

Bei weiteren bevorzugten Ausführungsformen kann die Kennlinie K, KL, KL` beispielhaft wie folgt ausgelegt werden: Die Versorgungsspannung der Vorrichtung 100, 1000 sei Uchip_supply = 5 V. Die Stromquellen 21, 22 arbeiten mit einem Spannungsabfall von Udrop = UDrop+ = UDrop- = 1 V. Die Pumpspannung Up der Sonde 10 bewegt sich im Bereich Up = - 2 V ... + 2,5 V. Der Waagrechte Teil W1 (Fig. 5) der Kennlinie wird bevorzugt so eingestellt, dass die Mitte des Pumpspannungsbereichs in der Mitte des Arbeitsbereichs des ersten Schaltungsknotenpunkts N1 bzw. der virtuellen Masse liegt. Im Beispiel 2,2 V, also W1 = 2,2 V. Mit den Beispielwerten sind die Formeln Up + Udrop+ + Uvm < Uchip_supply (für positive Up) und |Up| + Udrop- < Uvm (für negative Up) im Bereich Up = - 1,2 V ... 1,8 V gültig. Das heißt, im Bereich von - 1,2 V ... 1,8 V verläuft die Kennlinie K waagrecht bei 2,2 V. Kommt die Pumpspannung Up über 1,8 V so kann bevorzugt das elektrische Potential des ersten Schaltungsknotenpunkts N1 und damit z.B. die Spannung Uvm (Fig. 4), vgl. auch die vertikale Achse SWP in Fig. 5, herabgesetzt werden, um die o.g. Ungleichung gemäß weiteren bevorzugten Ausführungsformen wieder zu erfüllen. Dementsprechend kann bevorzugt das elektrische Potential des ersten Schaltungsknotenpunkts N1 und damit z.B. die Spannung Uvm (Fig. 4), vgl. auch die vertikale Achse SWP in Fig. 5, erhöht werden, z.B. wenn die Pumpspannung Up unter - 1,2 V fällt. Also bei Up = 1,9 V, Uvm = 2,1 V bzw. auf der negativen Seite (Up < 0) Up = - 1,3 V, Uvm = 2,3 V, Up = 1,8 V, Uvm = 2,0V bzw. auf der negativen Seite Up = - 1,4V, Uvm = 2,4V, ... usw... Up = 2,5 V, Uvm = 1,3V bzw. auf der negativen Seite Up = - 2,0 V, Uvm = 2,3V.

Sollte Up bei weiteren Ausführungsformen über 2,5 V steigen oder unter - 2 V sinken, kann die Gefahr einer Sondenschädigung bestehen. Dem kann bei weiteren bevorzugten Ausführungsformen entgegengewirkt werden, indem das elektrische Potential des ersten Schaltungsknotenpunkts N1 und damit z.B. die Spannung Uvm (Fig. 4), vgl. auch die vertikale Achse SWP in Fig. 5, wieder in Richtung Mitte (z.B. W1 = 2,2 V) gestellt wird und damit der Sondenstrom reduziert wird, weil die Stromquellen 21, 22 jetzt ggf. außerhalb des beispielhaft angenommenen Arbeitsbereichs AB (s. Fig. 2) Udrop+ < 1 V, Udrop- < 1V betrieben werden und ggf. weniger Strom liefern.

Bei weiteren bevorzugten Ausführungsformen kann die genaue Gestaltung der Kennlinie K, KL, KL` in diesem Bereich z.B. entsprechend der Parameter der Stromquelle(n) 21, 22 gewählt werden. Im Beispiel gemäß weiteren bevorzugten Ausführungsformen ...
Up = 2,6 V, Uvm = 1,5 V bzw. auf der neg. Seite Up = - 2,1 V, Uvm = 2,3 V,
Up = 2,7 V, Uvm = 1,7 V bzw. auf der neg. Seite Up = - 2,2 V, Uvm = 2,1V,
Up = 2,8 V, Uvm = 1,9 V bzw. auf der neg. Seite Up = - 2,3 V, Uvm = 2,2V, ... usw...
Up = 3,0 V, Uvm = 2,2 V bzw. auf der neg. Seite Up = -3,0 V, Uvm = 2,2 V.

## Patentansprüche

1. Verfahren zum Betreiben einer Breitband-Lambdasonde (10), bei der eine Nernstzelle (11) und eine Pumpzelle (12) über einen ersten Schaltungsknotenpunkt (N1) elektrisch in Serie geschaltet sind, wobei das Verfahren aufweist: Ermitteln (200) eines Spannungsabfalls (Up) über der Pumpzelle (12), Ermitteln (202) eines ersten Sollwerts (SW) für das elektrische Potential des ersten Schaltungsknotenpunkts (N1) in Abhängigkeit des Spannungsabfalls (Up) über der Pumpzelle (12), Beaufschlagen (204) des ersten Schaltungsknotenpunkts (N1) mit dem ersten Sollwert (SW), wobei für einen ersten Wertebereich (WB1) des Spannungsabfalls (Up) über der Pumpzelle (12) dem ersten Sollwert (SW) ein konstanter erster Wert (W1) zugeordnet wird, wobei für einen zweiten Wertebereich (WB2a, WB2b) des Spannungsabfalls (Up) über der Pumpzelle (12) dem ersten Sollwert (SW) ein in Abhängigkeit des Werts des Spannungsabfalls (Up) veränderlicher zweiter Wert (W2) zugeordnet wird.

2. Verfahren nach Anspruch 1, wobei das Ermitteln (202) des ersten Sollwerts (SW) in Abhängigkeit einer Kennlinie (KL) ausgeführt wird, wobei insbesondere die Kennlinie (KL) eine vorgebbare Abhängigkeit des ersten Sollwerts (SW) von dem Spannungsabfall (Up) über der Pumpzelle (12) aufweist.

3. Verfahren nach Anspruch 1, wobei der zweite Wert (W2) in Abhängigkeit des Werts des Spannungsabfalls (Up) linear veränderlich ist, wobei insbesondere eine Steigung der linearen Veränderung des zweiten Werts (W2) in Abhängigkeit des Werts des Spannungsabfalls (Up) negativ ist, insbesondere den Wert - 1 aufweist.

4. Verfahren nach wenigstens einem der vorstehenden Ansprüche, wobei für einen dritten Wertebereich (WB3a, WB3b) des Spannungsabfalls (Up) über der Pumpzelle (12) dem ersten Sollwert (SW) ein in Abhängigkeit des Werts des Spannungsabfalls (Up) veränderlicher dritter Wert (W3) zugeordnet wird.

5. Verfahren nach Anspruch 4, wobei der dritte Wert (W3) in Abhängigkeit des Werts des Spannungsabfalls (Up) linear veränderlich ist, wobei insbesondere eine Steigung der linearen Veränderung des dritten Werts (W3) in Abhängigkeit des Werts des Spannungsabfalls (Up) positiv ist, insbesondere den Wert 1 aufweist.

6. Vorrichtung (100; 1000) zum Betreiben einer Breitband-Lambdasonde (10), bei der eine Nernstzelle (11) und eine Pumpzelle (12) über einen ersten Schaltungsknotenpunkt (N1) elektrisch in Serie geschaltet sind, wobei die Vorrichtung (100; 1000) zur Ausführung der folgenden Schritte ausgebildet ist: Ermitteln (200) eines Spannungsabfalls (Up) über der Pumpzelle (12), Ermitteln (202) eines ersten Sollwerts für das elektrische Potential des ersten Schaltungsknotenpunkts (N1) in Abhängigkeit des Spannungsabfalls (Up) über der Pumpzelle (12), Beaufschlagen (204) des ersten Schaltungsknotenpunkts (N1) mit dem ersten Sollwert, wobei für einen ersten Wertebereich (WB1) des Spannungsabfalls (Up) über der Pumpzelle (12) dem ersten Sollwert (SW) ein konstanter erster Wert (W1) zugeordnet wird, wobei für einen zweiten Wertebereich (WB2a, WB2b) des Spannungsabfalls (Up) über der Pumpzelle (12) dem ersten Sollwert (SW) ein in Abhängigkeit des Werts des Spannungsabfalls (Up) veränderlicher zweiter Wert (W2) zugeordnet wird.

7. Vorrichtung (100; 1000) nach Anspruch 6, wobei die Vorrichtung (100; 1000) zur Ausführung des Verfahrens nach wenigstens einem der Ansprüche 2 bis 5 ausgebildet ist.

8. Vorrichtung (100; 1000) nach wenigstens einem der Ansprüche 6 bis 7, wobei die Vorrichtung (100; 1000) eine Recheneinrichtung (1002) und eine der Recheneinrichtung (1002) zugeordnete Speichereinrichtung (1004) aufweist, und wobei die Vorrichtung (100; 1000) dazu ausgebildet ist, eine bzw. die Kennlinie (KL; KL'), die eine vorgebbare Abhängigkeit des ersten Sollwerts (SW) von dem Spannungsabfall (Up) über der Pumpzelle (12) aufweist, zumindest zeitweise mittels der Speichereinrichtung (1004) zu speichern.

## Claims

1. Method for operating a broadband lambda probe (10), in which a Nernst cell (11) and a pump cell (12) are electrically connected in series via a first circuit node (N1), wherein the method comprises: determining (200) a voltage drop (Up) across the pump cell (12), determining (202) a first setpoint value (SW) for the electrical potential of the first circuit node (N1) as a function of the voltage drop (Up) across the pump cell (12), applying (204) the first setpoint value (SW) to the first circuit node (N1), wherein a constant first value (W1) is assigned to the first setpoint value (SW) for a first value range (WB1) of the voltage drop (Up) across the pump cell (12), wherein a second value (W2) is assigned to the first setpoint value (SW) for a second value range (WB2a, WB2b) of the voltage drop (Up) across the pump cell (12), said second value varying as a function of the value of the voltage drop (Up).

2. Method according to Claim 1, wherein the first setpoint value (SW) is determined (202) as a function of a characteristic curve (KL), wherein, in particular, the characteristic curve (KL) has a predeterminable dependency of the first setpoint value (SW) on the voltage drop (Up) across the pump cell (12).

3. Method according to Claim 1, wherein the second value (W2) is linearly variable as a function of the value of the voltage drop (Up), wherein, in particular, a gradient of the linear variation of the second value (W2) as a function of the value of the voltage drop (Up) is negative, in particular has the value -1.

4. Method according to at least one of the preceding claims, wherein a third value (W3) is assigned to the first setpoint value (SW) for a third value range (WB3a, WB3b) of the voltage drop (Up) across the pump cell (12), said third value varying as a function of the value of the voltage drop (Up).

5. Method according to Claim 4, wherein the third value (W3) is linearly variable as a function of the value of the voltage drop (Up), wherein, in particular, a gradient of the linear variation of the third value (W3) as a function of the value of the voltage drop (Up) is positive, in particular has the value 1.

6. Device (100; 1000) for operating a broadband lambda probe (10), in which a Nernst cell (11) and a pump cell (12) are electrically connected in series via a first circuit node (N1), wherein the device (100; 1000) is designed to carry out the following steps: determining (200) a voltage drop (Up) across the pump cell (12), determining (202) a first setpoint value for the electrical potential of the first circuit node (N1) as a function of the voltage drop (Up) across the pump cell (12), applying (204) the first setpoint value (SW) to the first circuit node (N1), wherein a constant first value (W1) is assigned to the first setpoint value for a first value range (WB1) of the voltage drop (Up) across the pump cell (12), wherein a second value (W2) is assigned to the first setpoint value (SW) for a second value range (WB2a, WB2b) of the voltage drop (Up) across the pump cell (12), said second value varying as a function of the value of the voltage drop (Up).

7. Device (100; 1000) according to Claim 6, wherein the device (100; 1000) is designed to carry out the method according to at least one of Claims 2 to 5.

8. Device (100; 1000) according to at least one of Claims 6 to 7, wherein the device (100; 1000) has a computation unit (1002) and a storage unit (1004) assigned to the computation unit (1002), and wherein the device (100; 1000) is designed to use the storage unit (1004) to at least temporarily store a or the characteristic curve (KL; KL'), which has a predeterminable dependency of the first setpoint value (SW) on the voltage drop (Up) across the pump cell (12).

## Revendications

1. Procédé pour faire fonctionner une sonde lambda à large bande (10), avec laquelle une cellule de Nernst (11) et une cellule de pompage (12) sont branchées électriquement en série par le biais d'un premier point nodal de circuit (N1), le procédé comprenant : détermination (200) d'une chute de tension (Up) aux bornes de la cellule de pompage (12), détermination (202) d'une première valeur de consigne (SW) pour le potentiel électrique du premier point nodal de circuit (N1) en fonction de la chute de tension (Up) aux bornes de la cellule de pompage (12), application (204) de la première valeur de consigne (SW) au premier point nodal de circuit (N1), une première valeur (W1) constante étant associée à la première valeur de consigne (SW) pour une première plage de valeurs (WB1) de la chute de tension (Up) aux bornes de la cellule de pompage (12), une deuxième valeur (W2) modifiable en fonction de la valeur de la chute de tension (Up) étant associée à la première valeur de consigne (SW) pour une deuxième plage de valeurs (WB2a, WB2b) de la chute de tension (Up) aux bornes de la cellule de pompage (12).

2. Procédé selon la revendication 1, la détermination (202) de la première valeur de consigne (SW) étant effectuée en fonction d'une courbe caractéristique (KL), la courbe caractéristique (KL) présentant notamment une dépendance pouvant être prédéfinie de la première valeur de consigne (SW) à la chute de tension (Up) aux bornes de la cellule de pompage (12).

3. Procédé selon la revendication 1, la deuxième valeur (W2) pouvant être modifiée linéairement en fonction de la valeur de la chute de tension (Up), une pente de la modification linéaire de la deuxième valeur (W2) en fonction de la valeur de la chute de tension (Up) étant notamment négative, en particulier possédant la valeur -1.

4. Procédé selon au moins l'une des revendications précédentes, une troisième valeur (W3) modifiable en fonction de la valeur de la chute de tension (Up) étant associée à la première valeur de consigne (SW) pour une troisième plage de valeurs (WB3a, WB3b) de la chute de tension (Up) aux bornes de la cellule de pompage (12).

5. Procédé selon la revendication 4, la troisième valeur (W3) pouvant être modifiée linéairement en fonction de la valeur de la chute de tension (Up), une pente de la modification linéaire de la troisième valeur (W3) en fonction de la valeur de la chute de tension (Up) étant notamment positive, en particulier possédant la valeur 1.

6. Dispositif (100 ; 1000) pour faire fonctionner une sonde lambda à large bande (10), avec laquelle une cellule de Nernst (11) et une cellule de pompage (12) sont branchées électriquement en série par le biais d'un premier point nodal de circuit (N1), le dispositif (100 ; 1000) étant configuré pour exécuter les étapes suivantes : détermination (200) d'une chute de tension (Up) aux bornes de la cellule de pompage (12), détermination (202) d'une première valeur de consigne pour le potentiel électrique du premier point nodal de circuit (N1) en fonction de la chute de tension (Up) aux bornes de la cellule de pompage (12), application (204) de la première valeur de consigne au premier point nodal de circuit (N1), une première valeur (W1) constante étant associée à la première valeur de consigne (SW) pour une première plage de valeurs (WB1) de la chute de tension (Up) aux bornes de la cellule de pompage (12), une deuxième valeur (W2) modifiable en fonction de la valeur de la chute de tension (Up) étant associée à la première valeur de consigne (SW) pour une deuxième plage de valeurs (WB2a, WB2b) de la chute de tension (Up) aux bornes de la cellule de pompage (12).

7. Dispositif (100 ; 1000) selon la revendication 6, le dispositif (100 ; 1000) étant configuré pour mettre en oeuvre le procédé selon au moins l'une des revendications 2 à 5.

8. Dispositif (100 ; 1000) selon au moins l'une des revendications 6 à 7, le dispositif(100 ; 1000) possédant un dispositif de calcul (1002) et un dispositif de mémorisation (1004) associé au dispositif de calcul (1002), et le dispositif(100 ; 1000) étant configuré pour mémoriser, au moins temporairement, au moyen du dispositif de mémorisation (1004), une ou la courbe caractéristique (KL ; KL') qui présente une dépendance pouvant être prédéfinie de la première valeur de consigne (SW) à la chute de tension (Up) aux bornes de la cellule de pompage (12).
